# EUROPEAN PATENT APPLICATION

(11) **EP 0 809 398 A2**
(43) Date of publication of application: **26.11.1997**
(21) Application number: 97108125.2
(22) Date of filing: 20.05.1997
(51) Int. Cl.: H04N 5/68

(54) **Cathode current detecting circuit**

(30) Priority: 20.05.1996 JP 124527/96
(71) Applicant: NEC CORPORATION, Tokyo (JP)
(72) Inventor: Kuroda, Atsushi, Minato-ku, Tokyo (JP); Hiraga, Takashi, Minato-ku, Tokyo (JP)
(74) Representative: VOSSIUS & PARTNER

(57) **Abstract**

A cathode current detecting circuit capable of detecting a cathode current without delay and without lowering frequency characteristics of an applied video signal. This cathode current detecting circuit comprises a generator for generating a cathode current detection reference signal on the basis of a synchronization signal, an adder for adding the detection reference signal to a video signal, an amplifier for amplifying the added video signal, a transistor for applying the amplified video signal to a cathode of a cathode-ray tube, a current/voltage converter resistor for converting a cathode current 8 into a voltage, a frequency characteristic compensating capacitor connected in parallel to the transistor and a switch connected in series to the capacitor, wherein the switch is controlled in synchronization with the detection reference signal so as to be turned on during an active video signal display period and turned off during the cathode current detection period.

## Description

The present invention relates to a circuit arrangement for detecting cathode currents in a cathode-ray tube used for a high definition display device.

A high definition display device using a cathode-ray tube adopts an automatic white balance compensating circuit for automatic hue control and such compensating circuit includes a circuit for detecting a cathode current in the cathode-ray tube for the white balance compensation control.

Such a cathode current detecting circuit must be configured so as not to allow cathode current detection to be delayed for a good quality display of high definition.

As a white balance compensating circuit adopted for a display device using a cathode-ray tube, there is known an automatic white balance compensating circuit which is configured to compensate white balance variations and lowered luminance caused due to deterioration with time or lowered emission in the cathode-ray tube, or to eliminate the necessity of adjustment (refer, for example, to USP No. 5,589,883).

In the automatic white balance compensating circuit, a cathode current is detected by applying a reference signal to a cathode in a cathode-ray tube and the detected result is applied to each electrode of the cathode-ray tube, in negative-feedback manner, so as to maintain the cathode current at constant (refer, for example, to "How To Check an Automatic White Balance Compensating Loop ?" by Norio Aoyama, TV Technology, Japan, 1991, June, pp. 101 to 102). A key point for designing an automatic white balance compensating circuit lies in how to securely detect a cathode current on the order of several tens of microamperes (µA) from a cathode to which a bias of one hundred and several tens of volts is applied.

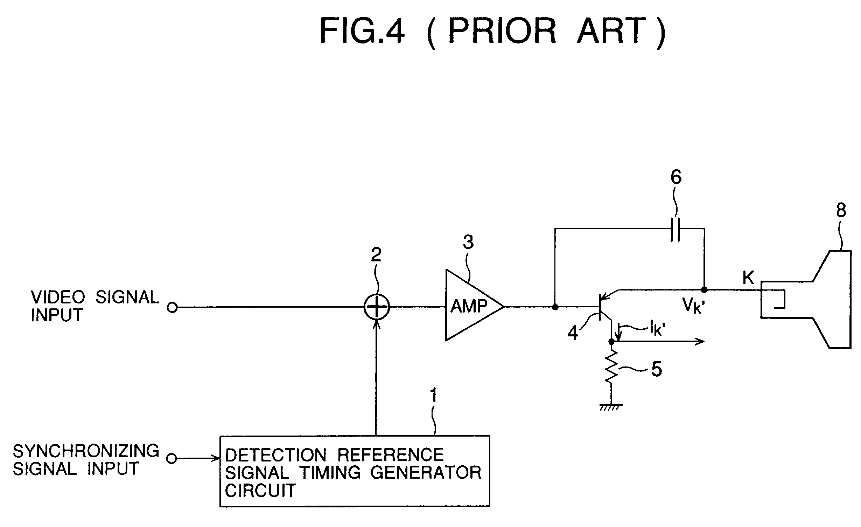

A conventional cathode current detecting circuit will be described below with reference to FIG. 4 showing a conventional one. In FIG. 4, a reference numeral 1 denotes a timing generating circuit (Timing Gen.) for generating a detection reference signal, a reference numeral 2 denotes an adding circuit for adding the detection reference signal with a video signal, a reference numeral 3 denotes a video signal amplifier circuit (AMP), a reference numeral 4 represents a transistor, a reference numeral 5 designates a current/voltage converter resistor for outputting a detected current value, a reference numeral 6 denotes a capacitor for frequency characteristic compensation and a reference numeral 8 represents a cathode-ray tube.

The Timing Gen. generates the detection reference signal at a predetermined timing (for example, the beginning of an active video period and a vertical blanking period). Further, the detection reference signal is designated to have a certain level closed to a black video level. The video signal amplifier circuit 3 amplifies the composite signal to a voltage level at which a cathode K of the cathode-ray tube 8 can be driven . The output of the video signal amplifier circuit 3 is added to the cathode K of the cathode-ray tube 8 through the capacitor 6 and an emitter-follower arrangement of the PNP transistor 4, in parallel.

When a cathode current is supplied to the cathode-ray tube 8, a current which is substantially the same as the cathode current flows from the emitter of the PNP transistor 4 to a collector thereof, whereby the voltage converted from the cathode current is detected across both ends of the resistor 5 which is connected to the collector. To detect the cathode current only, the emitter-follower arrangement of the PNP transistor 4 is free from a bias at this stage. Due to insufficient frequency characteristic of the emitter-follower arrangement of the PNP transistor shown in FIG. 4, high definition display function is ordinarily disturbed during an active video period. Therefore, the capacitor 6 is connected between the base and the emitter of the transistor 4 for bypassing high-frequency components.

On the other hand, in a cathode current detecting circuit disclosed by Japanese Patent Application Laid-Open No. Hei 5(1993)-183928, an emitter of a transistor which is connected to a CRT cathode is always turned on with a bias applied adequately in contrast to a base thereof, and can transfer a video signal to the cathode even when the video signal abruptly rises from white to black. However, the disclosed prior art is incapable of performing compensation operation precisely because while, due to applying the bias, it is difficult to detect a cathode current accurately.

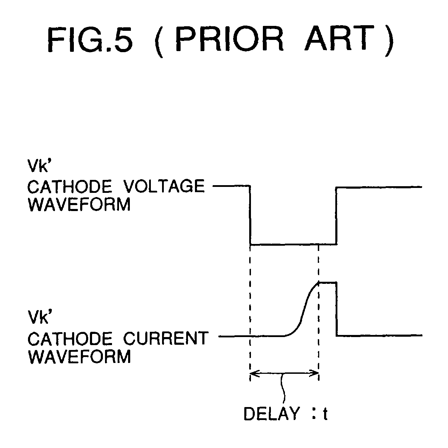

The conventional cathode current detecting circuit shown in FIG. 4 has a problem that it allows a cathode current detection to be delayed as compared with the detection reference signal. Waveforms of the detection reference signal and the current detection are illustrated in FIG. 5, wherein a current waveform Ik' detected as a value of the cathode current has a delay (t) as compared with a cathode voltage waveform Vk' formed on the basis of the detection reference signal. Such delay is induced by the following reason. Because, in Fig. 4, the cathode current flows not through the emitter of the PNP transistor 4 but through the capacitor 6 during an initial period of the detection referency signal, or at a starting time of the cathode current. When the capacitor 6 is assumed to have a capacity of thousands of picofarads (pF), for example, the detection delays is a dozen of microseconds (µS) or so.

Assuming that a horizontal scanning frequency of 100 kHz is specified for a video signal, a single horizontal scanning period is 100 µS. In this case, in order to detect a cathode current accurately, it is necessary to supply the detection reference signal for at least two horizontal scanning periods, whereby hindrance due to the reference signal is enhanced on a screen of a cathode ray tube. Further, the detection reference signal is overlapped with the display area for the active video signal on the screen of the cathode rays tube since a cathode current must be supplied to a cathode-ray tubes also during a horizontal retrace period.

When a capacity of the capacitor 6 is reduced for avoiding this problem, on the other hand, the detection delay of the cathode current may be reduced, but a frequency characteristic of a displayed video signal is degraded, thereby lowering a capability of displaying a high definition video signal on a screen.

The present invention has been achieved to solve the conventional technical problems described above and has an object to provide a cathode current detecting circuit which is capable of detecting a cathode current with no delay and without degrading a frequency characteristic of a video signal applied to a cathode of a cathode-ray tube and minimizing hindrance due to a current detection reference signal on a screen of the cathode-ray tube.

According to the present invention, a cathode current detecting circuit comprises a circuit for generating a cathode current detection reference signal having a predetermined a signal level and a certain timing, an adding circuit for adding the detection reference signal with a video signal, an amplifier for amplifying the added video signal, a circuit arrangement for applying the amplified video signal to a cathode of a cathode-ray tube, a circuit for detecting a cathode current of the cathode-ray tube, a frequency characteristic compensator element which is connected between the amplifier and the cathode of the cathode-ray tube, and a switch which is connected in series to the frequency characteristic compensator element for performing on/off operations in synchronization with timing of the detection reference signal.

This above-mentioned and other objects, features and advantages of this invention will become more apparent by reference to the following detailed description of the invention taken in conjunction with the accompanying drawings, wherein:
FIG. 1 is a block diagram descriptive of a first embodiment of the cathode current detecting circuit according to the present invention,
FIG. 2 is a block diagram illustrating a configuration of a second embodiment according to the present invention;
FIG. 3 is a diagram illustrating waveforms at different stages in the embodiment shown in FIG. 2;
FIG. 4 is a block diagram exemplifying a conventional cathode current detecting circuit; and
FIG. 5 is a diagram illustrating waveforms of a detection reference signal and a current detection value according to a conventional cathode current detecting circuit.

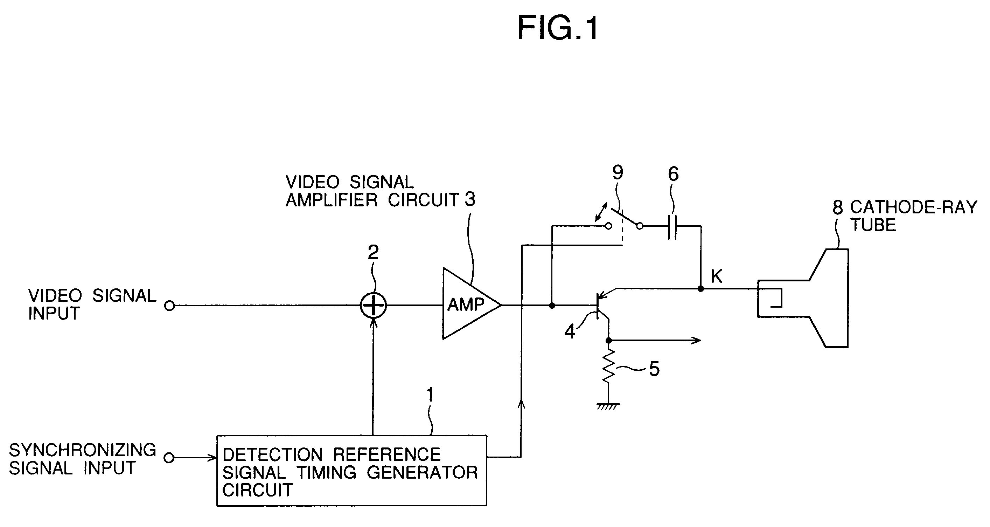

In FIG. 1 illustrating a first embodiment of a cathode current detecting circuit according to the present invention, components which are the same as those shown in FIG. 4 are represented by the same reference numerals and a reference numeral 9 designates a switch. In FIG. 1, the switch 9 is disposed in series to the capacitor 6 and in parallel with a cathode current detecting arrangement including the transistor 4 and resistor 5, and its open/close control is performed on the basis of a timing signal from the detection reference signal timing generator 1.

During a substantial period for displaying an active video signal, the switch 9 shown in FIG. 1 is turned on to allow high-frequency components of an output from the video signal amplifier circuit 3 to be bypassed to the cathode K of the cathode-ray tube 8 through the capacitor 6. During a period when the cathode current detection reference signal is applied, the switch 9 is turned off to supply a cathode current to the detecting resistor 5 through the PNP transistor 4, from the beginning of this period. In the embodiment, the detection reference signal is inserted for one horizontal scanning period just after the vertical blanking period is completed, and designated to have a signal level closed to a black level i.e. about 10% of a whole range.

Accordingly, the cathode current detecting circuit according to the present invention is capable of reducing delay in detection of a cathode current and enhancing capability to display high definition images on a screen of a cathode-ray tube.

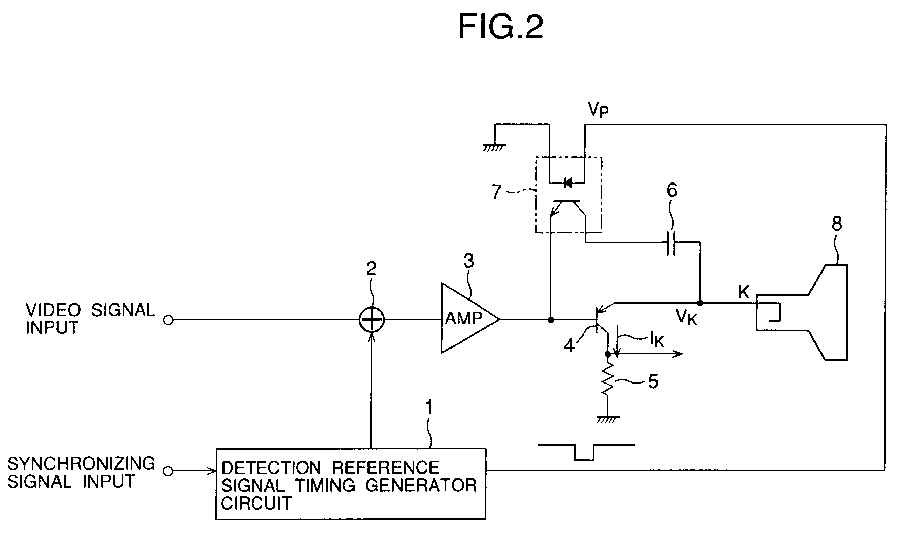

A second embodiment of the cathode current detecting circuit according to the present invention is shown in FIG. 2, wherein components which are the same as those of the circuit illustrated in FIG. 1 and FIG. 4 are represented by the same reference numerals. In FIG. 2, a reference numeral 7 represents a photocoupler including a light emitting element on a primary side and a phototransistor on a secondary side. The phototransistor is turned on when the light emitting element emits light.

In FIG. 2, one output (detection reference signal) from the detection reference signal timing generator circuit 1 is supplied to the reference signal adding circuit 2 and the other (detection timing signal) one is supplied to one end of on/off control circuit terminals on the primary side of the photocoupler 7, and the other end of the on/off control terminals of the photocoupler 7 is grounded. An output of the reference signal adding circuit 2 is supplied to the video signal amplifier 3. An output of the video signal amplifier circuit 3 is connected to a base of the PNP transistor 4 and an emitter on the secondary side of the photocoupler 7. An emitter of the PNP transistor 4 is connected to a cathode of the cathode-ray tube 8 and one end of the capacitor 6, and the other end of the capacitor 6 is connected to a collector on the secondary side of the photocoupler 7. Further, a collector of the PNP transistor 4 is connected to one end of the detecting resistor 5, whereas the other end of the detecting resistor is grounded.

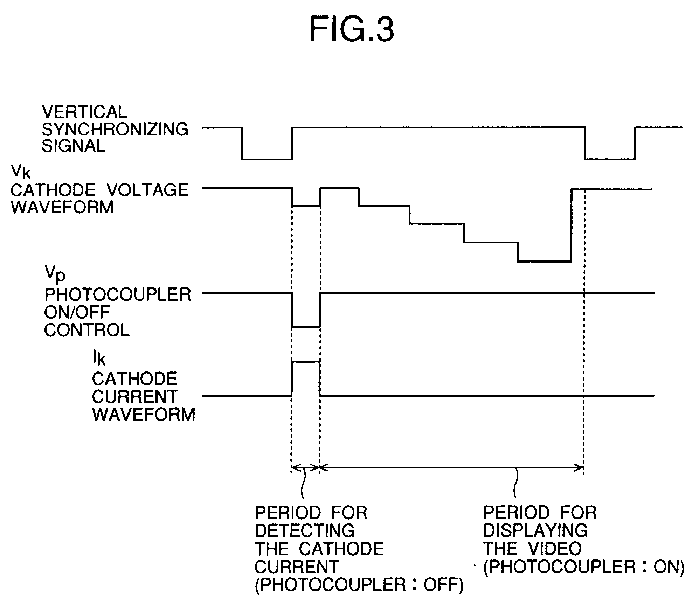

Now, description will be made of operations of the embodiment shown in FIG. 2 with reference to FIG. 3 illustrating waveforms at different stages in this embodiment. In FIG. 2, a vertical synchronizing signal is input into the detection reference signal timing generator circuit 1. Accordingly, the circuit 1 generates the detection reference signal having the predetermined level at the certain timing corresponding to a definite location on a screen, during a horizontal scanning period. For example, this signal is generated immediately upon completion of a vertical blanking (retrace) period, in other words, at the beginning of the active video period. This detection reference signal is added to the video signal through the adding circuit 2. The other timing signal is also generated by the circuit 1 and used for on/off control of the photocoupler 7.

The added video signal is amplified by the video signal amplifier 3, and then used for driving the cathode of the cathode-ray tube 8 by way of the photocoupler 7, the capacitor (frequency characteristic compensating element) 6 and the PNP transistor 4.

The photocoupler 7 is turned on during a display period of an active video signal, whereby high-frequency components of the video signal are applied to the cathode K of the cathode-ray tube 8 through the capacitor 6, whereas DC components are applied to the cathode K of the cathode-ray tube 8 through the PNP transistor 4. On the other hand, the photocoupler 7 is turned off during a cathode current detection period, whereby a cathode current of the cathode-ray tube 8 is not supplied to the capacitor 6, but supplied from the emitter of the PNP transistor 4 to the collector thereof so as to allow the current detection at the detecting resistor 5 without detection delay.

As understood from the foregoing description, the cathode current detecting circuit according to the present invention provides a merit to accelerate detection of a cathode current of a cathode-ray tube. Accordingly, the cathode current detector circuit according to the present invention is capable of minimizing a period of the reference signal to be applied in the video signal, in other words, widths of the detection signal displayed on the screen of the cathode-ray tube, and coping with video signals having higher horizontal scanning frequencies. This merit is obtained by reducing the delay in detection of cathode currents.

The cathode current detector circuit according to the present invention provides a further merit to enhance the frequency characteristic of the video signal applied to the cathode, thereby enhancing display capabilities for high definition images on screens. Though the acceleration of cathode current detection which is the first merit and the enhancement in the frequency characteristic of the displayed video signal which is the second merit are conflicting each other in the conventional cathode current detecting circuit, the cathode current detecting circuit according to the present invention is capable of compensating both frequency characteristics and cathode current detection speeds.

## Claims

1. A cathode current detecting circuit for a cathode-ray tube comprising:
means for generating a detection reference signal;
means for adding said detection reference signal to a video signal;
an amplifier for amplifying an output of said adding means; and
a circuit for applying an output of said amplifier to a cathode of said cathode-ray tube, wherein said applying circuit includes means for detecting a cathode current of said cathode-ray tube, a frequency characteristic compensating element which is connected between said amplifier and the cathode of the cathode-ray tube, and a switch means which is connected in series to said frequency characteristic compensating element and on/off controlled in synchronization with timing of said detection reference signal.

2. A cathode current detecting circuit as claimed in claim 1, wherein said detecting means includes an emitter-follower arrangement of a transistor in which an emitter is connected to said cathode, and a resistor connected to a collector of said transistor.

3. A cathode current detecting circuit as claimed in claim 2, said frequency characteristic compensating element is a capacitor for bypassing a high frequency of said video signal.

4. A circuit as claimed in claim 1, 2 or 3,
said switch means includes a photocoupler having a light emitting element on a primary side and a phototransistor on a secondary side, in which said detection reference signal is applied to said light emitting element of said photocoupler and said phototransistor of said photocoupler is connected to said frequency characteristic compensating element in series.

5. A circuit as claimed in any one of claims 1 to 4,
wherein said detection reference signal is generated at the beginning of an active video period.

6. A circuit as claimed in any one of claims 1 to 5,
wherein said detection reference signal is generated upon completion of a vertical blanking period.

7. A circuit as claimed in any one of claims 1 to 6,
said detection reference signal has a pulse width corresponding one horizontal scanning period.

8. A cathode current detecting circuit for a cathode-ray tube comprising:
a detection reference signal timing generator for generating a detection reference signal on the basis of a synchronization signal of a video signal;
an adder for adding said detection reference signal to said video signal;
an amplifier for amplifying an added video signal from said adder;
a transistor for applying an amplified video signal from said amplifier to a cathode of the cathode-ray tube;
a current/voltage converter resistor for converting a cathode current of the cathode-ray tube into a detection voltage;
a capacitor which is connected in parallel to said transistor; and
a switch which is connected in series to said capacitor, and is controlled so as to be turned on during an active video period and turned off during a cathode current detection period.

9. A cathode current detector circuit according to claim 8, wherein said switch is a photocoupler having a light emitting side which receives said detection reference signal, and a phototransistor side connected in series to said capacitor.
